# EUROPEAN PATENT APPLICATION

(11) **EP 4 852 164 A1**
(43) Date of publication of application: **09.12.2026**
(21) Application number: 26182289.4
(22) Date of filing: 01.06.2026
(51) Int. Cl.: H01M 50/147, H01M 50/15, H01M 50/186, H01M 50/342

(54) **CAP ASSEMBLY, SECONDARY BATTERY, AND METHOD OF MANUFACTURING SECONDARY BATTERY**

(30) Priority: 02.06.2025 KR 20250072023
(71) Applicant: SAMSUNG SDI CO., LTD., Yongin-si, Gyeonggi-do 17084 (KR)
(72) Inventor: BAE, Kwang Soo, 16678 Suwon-si, Gyeonggi-do (KR); YONG, Jun Sun, 16678 Suwon-si, Gyeonggi-do (KR); LEE, Jun Hyung, 16678 Suwon-si, Gyeonggi-do (KR)
(74) Representative: Gulde & Partner

(57) **Abstract**

The present disclosure relates to a cap assembly, a secondary battery, and a method of manufacturing a secondary battery. The technical problem to be solved is to provide a cap assembly including a cell vent made of a resin material, a secondary battery including the same, and a method of manufacturing the secondary battery including the cap assembly. To this end, the present disclosure provides a cap assembly including a cap plate having a vent hole, a terminal protruding outward from the cap plate, and a cell vent coupled to the cap plate to close the vent hole and including a resin rupturable by a change in at least one of pressure and/or temperature.

## Description

### BACKGROUND

### Field

The present disclosure relates to a cap assembly, a secondary battery, and a method of manufacturing the secondary battery.

### Description of Related Art

In general, with the rapid spread of electronic devices using batteries, such as mobile phones, notebook computers, and electric vehicles, the demand for secondary batteries with high energy density and high capacity has rapidly increased. Accordingly, research and development for improving the performance of lithium secondary batteries is being actively conducted.

A lithium secondary battery is a battery which includes a positive electrode and a negative electrode material, each of which includes an active material capable of intercalating and deintercalating lithium ions and an electrolyte and in which electrical energy is produced through oxidation and reduction reactions when lithium ions are intercalated/deintercalated into/from the positive electrode and the negative electrode.

The aforementioned information disclosed in this background section is merely for enhancement of understanding of the background technology of the present disclosure, and therefore may contain information that does not constitute the related art.

### SUMMARY

The present disclosure is directed to providing a cap assembly including a cell vent made of a resin material, a secondary battery including the cap assembly, and a method of manufacturing the secondary battery including the cap assembly.

However, technical objectives to be achieved by the present disclosure are not limited to the herein-described objectives, and other objectives, which are not described herein, will be clearly understood by those skilled in the art through the following description of the disclosure.

According to an aspect of the present disclosure, there is provided a cap assembly including a cap plate having a vent hole, a terminal protruding outward from the cap plate, and a cell vent coupled to the cap plate to close the vent hole and including a resin rupturable by a change in at least one of pressure and/or temperature.

The cap assembly offers notable benefits for manufacturing and operational safety. By constructing the cell vent from a specialized resin, the overall assembly process is simplified. This allows for more integrated production methods, which can lead to reduced manufacturing complexity and lower costs.

Furthermore, the choice of a specific resin for the vent provides a safety enhancement. This material is engineered to rupture when exposed to either excessive internal pressure or high temperatures. This dual-response capability ensures that the vent activates more rapidly and reliably during various types of internal battery malfunctions. Consequently, it provides an effective way to release internal build-up, thereby mitigating the risk of a catastrophic failure, such as a fire or explosion.

The cap assembly may further include a gasket including a second resin and coupled to the terminal and the cap plate such that a space between the terminal and the cap plate is sealed.

The inclusion of a resin gasket provides the advantage to create a durable seal between the terminal and the cap plate. This seal prevents the leakage of internal battery contents, such as electrolyte, and protects the internal components from external contaminants like moisture. This ensures the battery's long-term performance, safety, and reliability.

Additionally, the gasket serves as an electrical insulator, safely separating the conductive terminal from the cap plate and preventing potential short circuits. Finally, since the gasket is also made of a resin, it complements the overall design by allowing for co-molding with other resin parts in a single, efficient manufacturing step, further simplifying production and reducing costs.

The gasket and the cell vent may be integrally connected.

By making the gasket and the cell vent into a single, integrally connected piece, the manufacturing process is simplified. This eliminates the need to handle and align separate parts, reducing assembly time and potential for errors. This unified construction also enhances the structural integrity of the assembly and improves sealing performance by removing the seam between the two components, which could otherwise be a potential leak path.

The cap assembly may include a bridge including a third resin and configured to connect the gasket to the cell vent.

The addition of a bridge provides a robust, mechanical link between the gasket and the cell vent. This structural connection ensures the two components maintain their precise relative positions, which is especially beneficial during the high-pressure injection molding process. It increases the overall rigidity of the resin structure, making the final part more durable and reliable.

The bridge may be bonded to an inner surface of the cap plate.

Bonding the bridge directly to the inner surface of the cap plate provides a secure anchor for the entire resin assembly. This firm attachment enhances the mechanical stability, preventing any shifting or rotation of the resin parts relative to the cap plate. This results in a more reliable and robust seal, improving the overall integrity and performance of the cap assembly under operational stress.

The cell vent may include a rim portion bonded to an inner circumferential surface of the vent hole of the cap plate which defines the vent hole, a central plate portion configured to close the vent hole and connected to the rim portion, and a notch portion formed in the central plate portion and ruptured when internal pressure of a case coupled to the cap plate is greater than or equal to reference pressure.

Defining the cell vent with a distinct rim, central plate, and notch allows for precise control over its safety function. The notch creates a predictable weak point, ensuring the vent ruptures at a specific, reliable pressure. The design separates the function of the thick rim, which provides a strong bond for sealing, from the thin, notched central plate, which is optimized for controlled failure, thereby maximizing both normal operational integrity and safety during a fault.

A height difference between the central plate portion and an outer surface of the cap plate may be greater than a height difference between the central plate portion and an inner surface of the cap plate.

A height difference between the central plate portion and an inner surface of the cap plate may be greater than a height difference between the central plate portion and an outer surface of the cap plate.

A height difference between the central plate portion and an inner surface of the cap plate may be equal to a height difference between the central plate portion and an outer surface of the cap plate.

By precisely defining the geometric position of the cell vent relative to the cap plate's inner and outer surfaces, the behavior of the venting process can be controlled. This specific positioning can be used to direct the flow of hot gas and flames away from sensitive areas, optimize the speed of pressure release, and ensure that the ruptured parts of the vent do not cause a secondary blockage. Each geometric configuration offers a way to fine-tune the safety performance of the battery.

The notch portion may include a closed-curve groove having a closed-curve planar shape, and a linear groove extending from the closed-curve groove to an outer circumference of the central plate portion along a linear path.

Structuring the notch with a closed-curve groove and extending linear grooves creates a highly reliable and predictable rupture mechanism. The closed-curve groove acts like a predefined "lid," while the linear grooves function as tear initiators or "hinges." This ensures the vent opens cleanly and widely for rapid and complete pressure release, without ejecting the ruptured piece as a potentially hazardous projectile. The notch portion may include a first linear groove extending along a first linear path without contact with an outer circumference of the central plate portion, and a second linear groove extending from an end of the first linear groove along a second linear path intersecting the first linear groove.

Using a pattern of intersecting linear grooves for the notch creates a focused point of stress concentration. This guarantees that the vent will begin to tear at that specific point when pressure rises, and the tear will propagate predictably along the predefined lines. This design allows the vent to activate at a very low pressure and open in a controlled, petal-like manner, ensuring a clear opening without generating loose debris.A textured portion may be formed on at least one of a cell vent contact surface portion of a surface of the cap plate in contact with the cell vent, and/or a cap plate contact surface portion of a surface of the cell vent in contact with the cap plate.

Applying a texture to the contact surfaces between the resin vent and the metal cap plate significantly increases the bonding area and creates a strong mechanical interlock. This greatly enhances the bond strength between the two different materials, which dramatically improves the sealing performance and prevents leaks. This results in a more durable and reliable assembly that can withstand high pressure and temperature changes.

According to another aspect of the present disclosure, there is provided a secondary battery including an electrode assembly, a case configured to accommodate the electrode assembly and including an opening in one side thereof, and a cap assembly coupled to the case, wherein the cap assembly includes a cap plate having a vent hole, a terminal protruding outward from the cap plate, and a cell vent coupled to the cap plate to close the vent hole and including a resin rupturable by a change in at least one of pressure and/or temperature.

By incorporating the cap assembly into a complete secondary battery, the battery as a whole gains all the associated benefits. The final energy storage device is inherently safer due to the dual-action vent, more reliable thanks to the robust sealing, and more economical to produce because of the streamlined manufacturing process, resulting in a superior overall product.

According to still another aspect of the present disclosure, there is provided a method of manufacturing a secondary battery, the method including a cap plate preparation operation of preparing a cap plate having a vent hole, a cell vent formation operation of molding a resin to form a cell vent configured to close the vent hole and coupled to the cap plate, an electrode assembly insertion operation of inserting an electrode assembly into the case through an opening of a case, and a cap plate bonding operation of bonding the cap plate, to which the cell vent is bonded, to the case such that the opening is closed.

This structured manufacturing method ensures the efficient and repeatable production of high-quality batteries. By forming the cell vent directly onto the cap plate before the final sealing of the battery case, the process simplifies the overall assembly. It reduces the need for difficult and precise postassembly steps, leading to higher manufacturing throughput, lower costs, and better product consistency.

The cell vent formation operation may include an insert injection operation of inserting the cap plate into an injection mold and injecting the resin into the injection mold.

Using insert injection molding to form the cell vent is an efficient manufacturing technique. It allows for the creation of a strong, seamless bond between the metal cap plate and the molten resin in a single, automated step. This method guarantees perfect alignment and superior bonding strength without needing extra adhesives or welding, resulting in a high-quality, low-cost assembly with excellent sealing and mechanical properties.

### BRIEF DESCRIPTION OF THE DRAWINGS

The herein described aspects and other objects, features and advantages of the present disclosure will become more apparent to those of ordinary skill in the art by describing exemplary embodiments thereof in detail with reference to the accompanying drawings, in which:
FIG. 1 is an exploded perspective view of a battery module according to one embodiment of the present disclosure;
FIG. 2 is a perspective view of a secondary battery according to one embodiment of the present disclosure;
FIG. 3 is an exploded perspective view of the secondary battery of FIG. 2;
FIG. 4 is a schematic view illustrating a configuration of an electrode assembly of FIG. 3;
FIG. 5 is a cross-sectional view along line S1-S1 of FIG. 2;
FIG. 6 is a perspective view illustrating a cap assembly according to a first embodiment of the present disclosure as viewed from below;
FIG. 7 is an exploded perspective view illustrating the cap assembly of FIG. 6;
FIG. 8 is an enlarged plan view of a cell vent included in the cap assembly according to the first embodiment of the present disclosure;
FIG. 9 is a cross-sectional view along line S2-S2 of FIG. 8;
FIG. 10 is a cross-sectional view illustrating a first modified example of a notch portion of FIG. 9;
FIG. 11 is a cross-sectional view illustrating a second modified example of the notch portion of FIG. 9;
FIG. 12 is a cross-sectional view illustrating a third modified example of the notch portion of FIG. 9;
FIG. 13 is an enlarged cross-sectional view illustrating part A of FIG. 9;
FIG. 14 is a cross-sectional view of a cap assembly according to a second embodiment of the present disclosure and an enlarged view of a cell vent and surroundings thereof;
FIG. 15 is a cross-sectional view of a cap assembly according to a third embodiment of the present disclosure and an enlarged view of a cell vent and surroundings thereof;
FIG. 16 is an enlarged plan view of a cell vent included in a cap assembly according to a fourth embodiment of the present disclosure;
FIG. 17 is a block diagram showing a method of manufacturing a secondary battery according to one embodiment of the present disclosure;
FIG. 18 is a schematic block diagram illustrating a cell vent formation operation, a gasket formation operation, and a bridge formation operation of FIG. 17; and
FIG. 19 exemplarily illustrates a cap plate and terminal installation operation of FIG. 18 and is a cross-sectional view illustrating a state in which a cap plate and a terminal are installed inside an injection mold.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C; A and B; A and C; B and C; or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

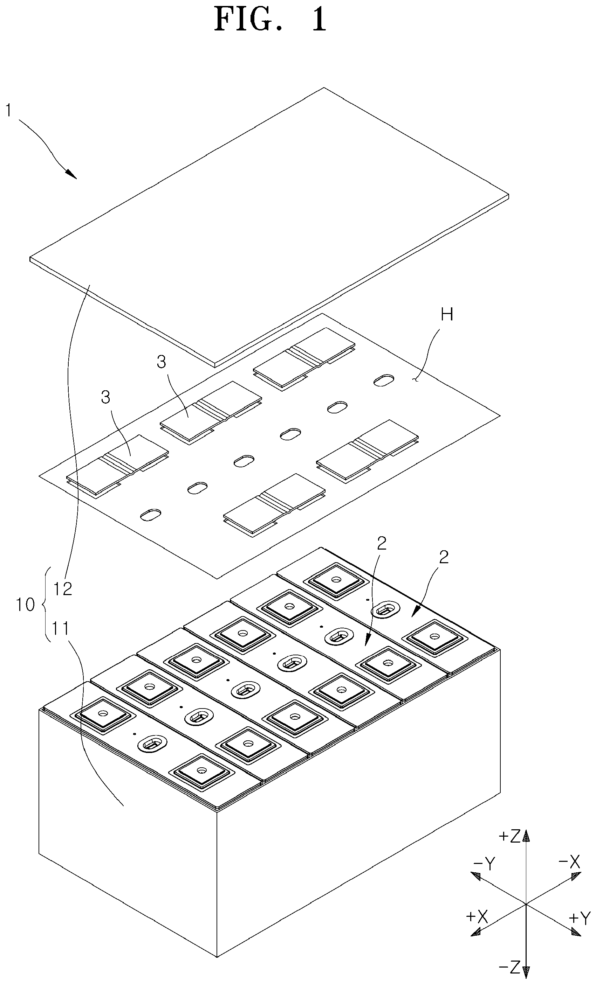

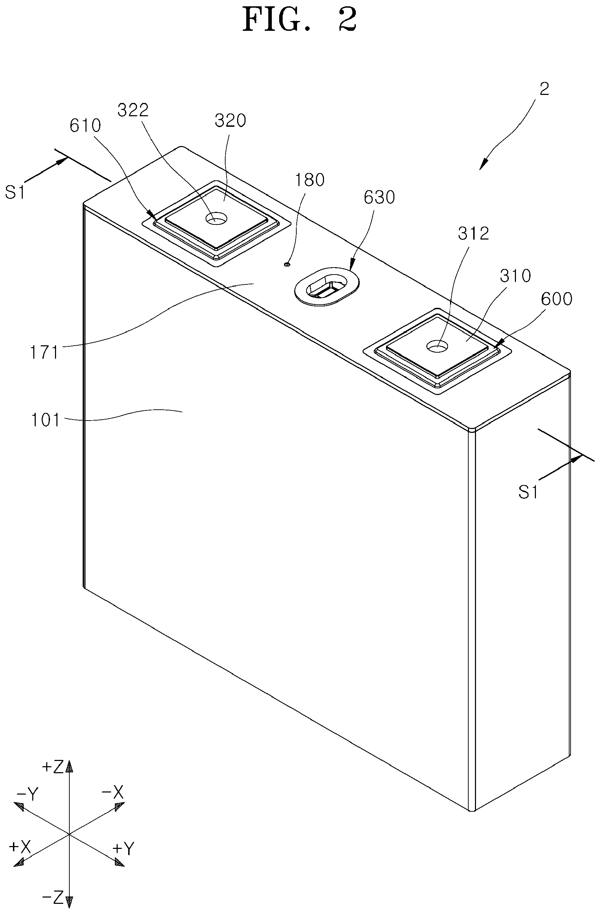

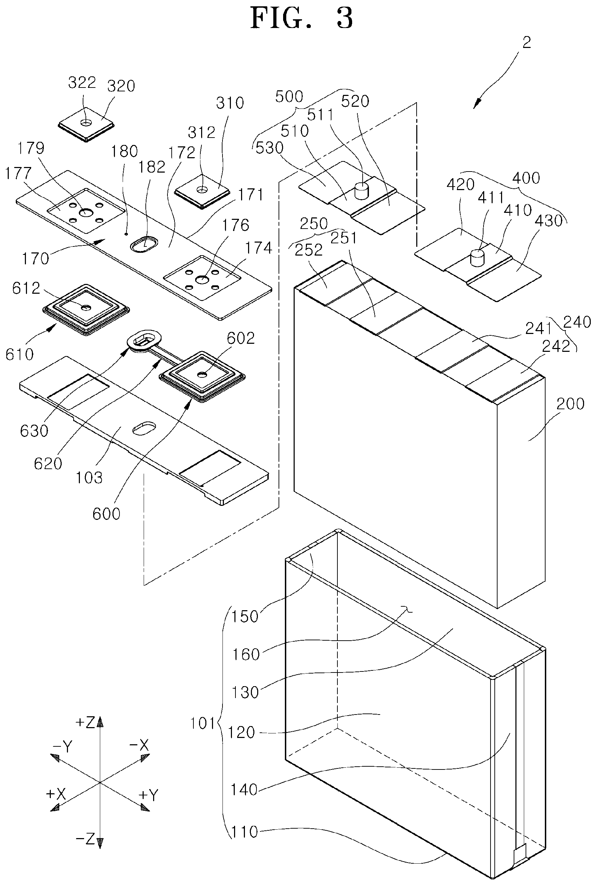

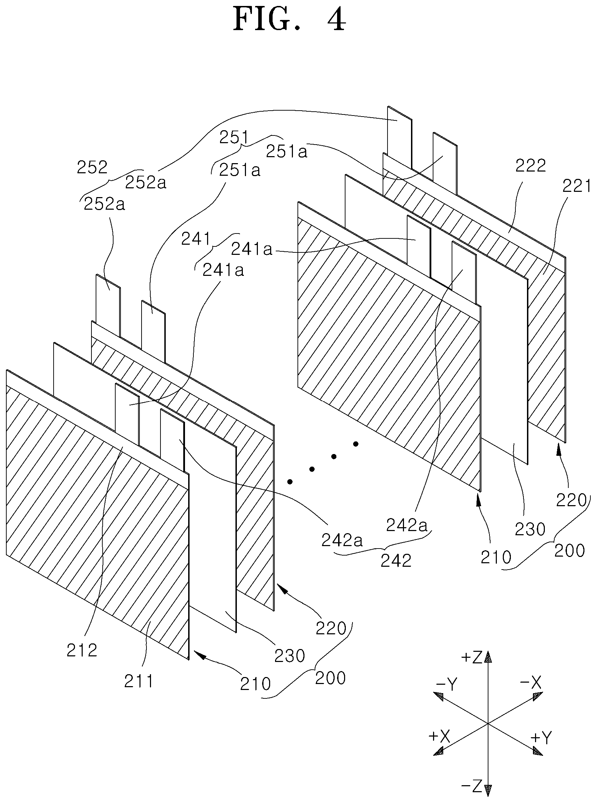

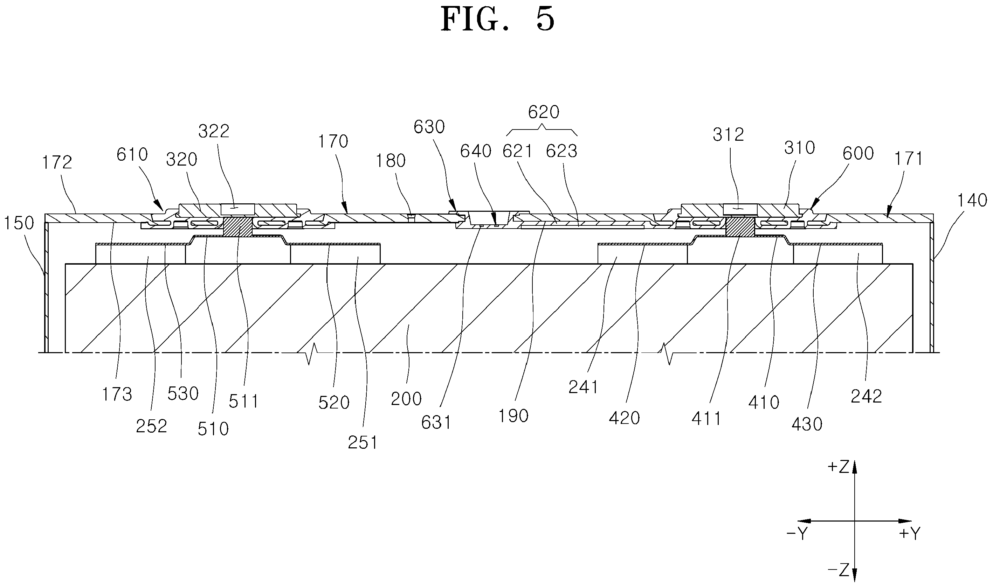

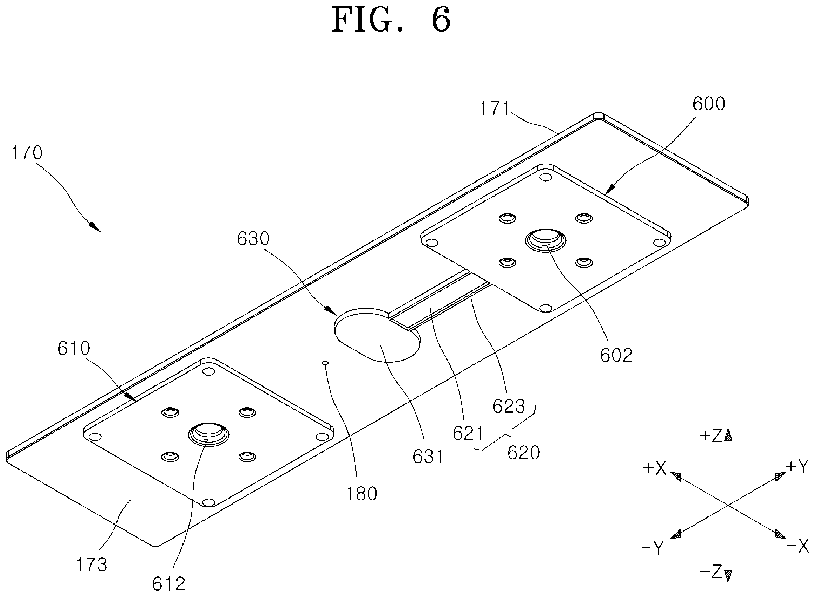

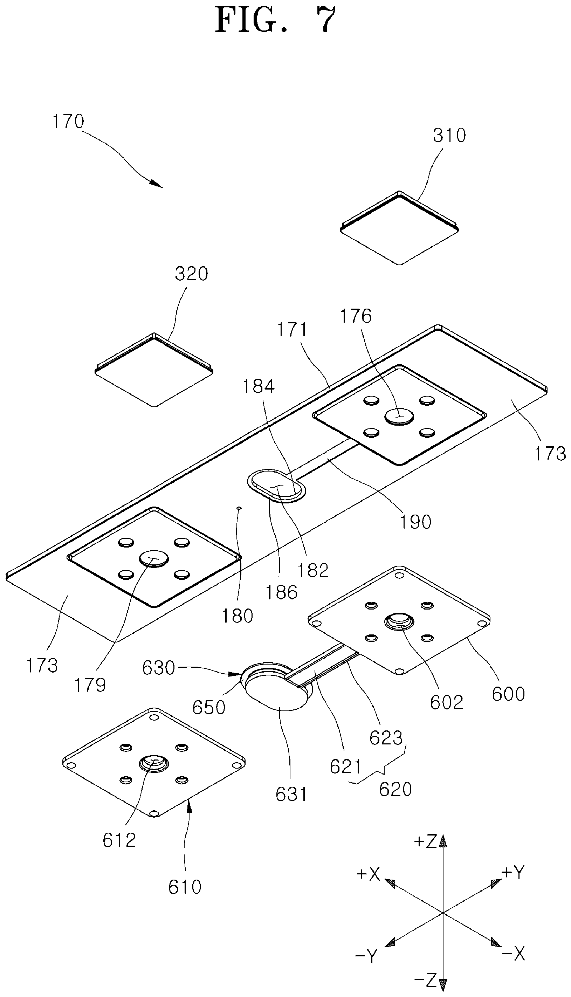

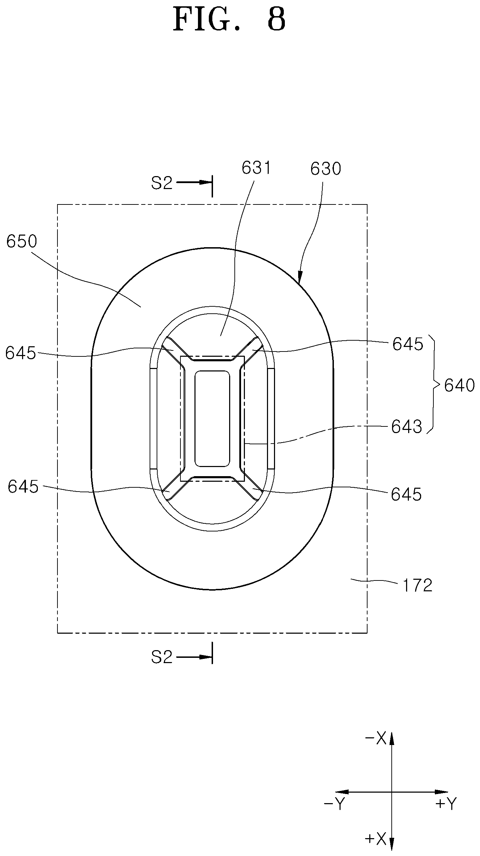

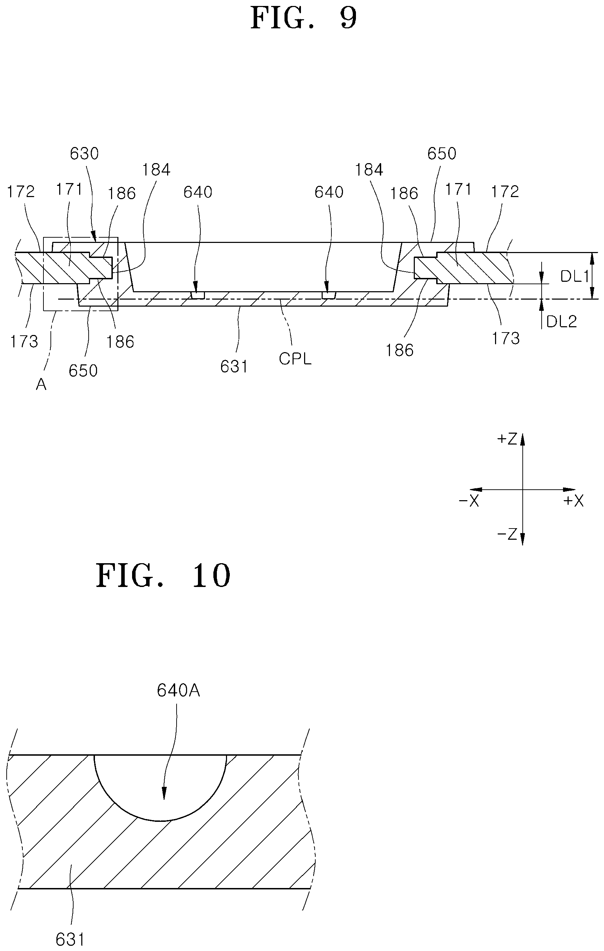

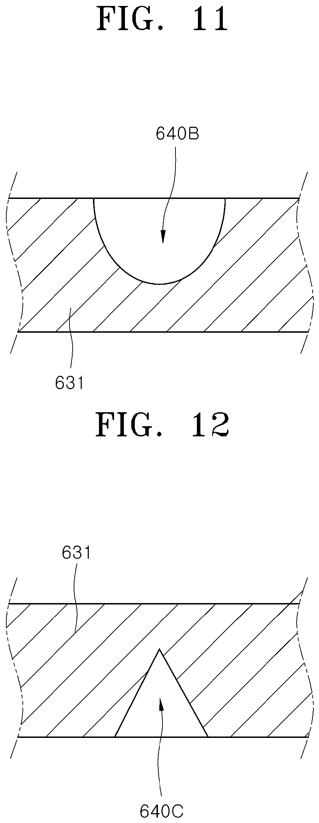

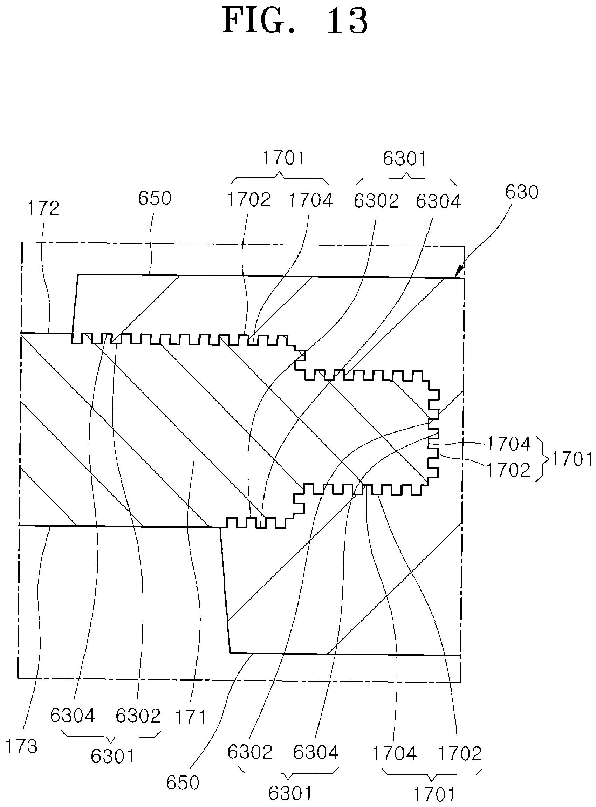

FIG. 1 is an exploded perspective view of a battery module according to one embodiment of the present disclosure. FIG. 2 is a perspective view of a secondary battery according to one embodiment of the present disclosure. FIG. 3 is an exploded perspective view of the secondary battery of FIG. 2. FIG. 4 is a schematic view illustrating a configuration of an electrode assembly of FIG. 3. FIG. 5 is a cross-sectional view along line S1-S1 of FIG. 2. FIG. 6 is a perspective view illustrating a cap assembly according to a first embodiment of the present disclosure as viewed from below. FIG. 7 is an exploded perspective view illustrating the cap assembly of FIG. 6. FIG. 8 is an enlarged plan view of a cell vent included in the cap assembly according to the first embodiment of the present disclosure. FIG. 9 is a cross-sectional view along line S2-S2 of FIG. 8. FIG. 10 is a cross-sectional view illustrating a first modified example of a notch portion of FIG. 9. FIG. 11 is a cross-sectional view illustrating a second modified example of the notch portion of FIG. 9. FIG. 12 is a cross-sectional view illustrating a third modified example of the notch portion of FIG. 9. FIG. 13 is an enlarged cross-sectional view illustrating part A of FIG. 9.

Referring to FIG. 1, a battery module 1 according to the present embodiment includes a housing 10 and a secondary battery 2.

The housing 10 may form an exterior of the battery module 1 and may provide a space in which the secondary battery 2 may be accommodated.

The housing 10 according to the present embodiment may include a housing body 11 and a cover 12.

The housing body 11 may be formed to have a hollow box shape with one open side. A cross-sectional shape of the housing body 11 is not limited to a quadrangular shape shown in FIG. 1 and may be designed to be changed into any of various shapes such as a polygonal shape, a circular shape, and an oval shape.

The cover 12 may be coupled to the housing body 11 and may close an internal space of the housing body 11. As an example, the cover 12 may be formed to have a substantially plate shape and may be disposed to face the open side of the housing body 11. The cover 12 may be fixed to the housing body 11 through various types of coupling methods including bolting, welding, fitting, and the like.

The secondary battery 2 may function as a unit structure that stores and supplies power in and from the battery module 1. The secondary battery 2 may be disposed inside the housing 10.

A plurality of secondary batteries 2 may be provided. The plurality of secondary batteries 2 may be disposed in two or more columns in at least one direction of a longitudinal direction of the housing 10 (X-axis direction in FIG. 1) and a width direction of the housing 10 (Y-axis direction in FIG. 1). Although FIG. 1 illustrates an example in which the plurality of secondary batteries 2 are arranged in 6 columns in the longitudinal direction of the housing 10, an arrangement form of the plurality of secondary batteries 2 is not limited thereto and may be designed to be changed into various forms. The plurality of secondary batteries 2 may be disposed parallel to each other. The number of secondary batteries 2 may be designed to be changed in various ways according to the size, shape, and the like of the housing 10.

The plurality of secondary batteries 2 may be electrically connected by a busbar 3.

The busbar 3 according to the present embodiment may be disposed between the cover 12 and the secondary battery 2. A plurality of busbars 3 may be provided. Each busbar 3 may connect a pair of adjacent secondary batteries 2 in series or in parallel.

The busbar 3 may be made of an electrically conductive material such as copper, aluminum, or nickel. A specific shape of the busbar 3 is not limited to that shown in FIG. 1 and may be designed to be changed into any of various shapes that may electrically connect adjacent secondary batteries 2.

The plurality of busbars 3 may be supported inside the housing 10 by a busbar holder H.

The busbar holder H according to the present embodiment may be formed to have a flat plate shape. The busbar holder H may be disposed between the cover 12 and the secondary battery 2. The busbar 3 may be fixed to the busbar holder H through various types of coupling methods including fitting, bolting, injection coupling, and the like. The busbar holder H may be formed to include an electrically insulating polymer compound material.

Hereinafter, the secondary battery 2 according to one embodiment of the present disclosure will be further described. Hereinafter, an example in which the secondary battery is a lithium ion secondary battery which is a prismatic battery will be described. However, the present disclosure is not limited thereto, and the secondary battery may be another type of battery such as a lithium polymer battery or a cylindrical battery.

In the following description, based on FIGS. 2 to 6, a first direction may be exemplified as a +Z-axis direction, a second direction may be exemplified as a -Y-axis direction, and a third direction may be exemplified as a -X-axis direction.

Referring to FIGS. 2 and 3, the secondary battery 2 according to the present embodiment includes a case 101, an electrode assembly 200, and a cap assembly 170.

The electrode assembly 200 is accommodated in the case 101. The case 101 is provided with an internal space in which the electrode assembly 200 may be accommodated. The case 101 may be made of a metallic material such as nickel or aluminum or a non-metallic material such as reinforced plastic.

In the present embodiment, the case 101 may include a bottom portion 110, a front portion 120, a rear portion 130, a first side portion 140, and a second side portion 150.

The bottom portion 110 may form an exterior of a lower side of the case 101 (see FIG. 3). The bottom portion 110 according to the present embodiment may have a rectangular plate shape. The bottom portion 110 may be seated on a bottom surface of the housing body 11.

The front portion 120, the rear portion 130, the first side portion 140, and the second side portion 150 may form an exterior of a peripheral surface of the case 101. In the present embodiment, the front portion 120, the rear portion 130, the first side portion 140, and the second side portion 150 may each have a plate shape extending from an edge of the bottom portion 110 in the first direction.

The front portion 120, the rear portion 130, the first side portion 140, and the second side portion 150 may be disposed together to surround a space above the bottom portion 110. The front portion 120, the rear portion 130, the first side portion 140, and the second side portion 150 may be disposed to form a rectangular cross-sectional shape.

The front portion 120 and the rear portion 130 may be disposed to face each other in the third direction. The rear portion 130 may be disposed to be spaced a predetermined distance apart from the front portion 120 in the third direction. The front portion 120 and the rear portion 130 may be disposed parallel to each other. Areas of the front portion 120 and the rear portion 130 may be equal to each other.

The first side portion 140 and the second side portion 150 may be disposed to face each other in the second direction. The second side portion 150 may be disposed to be spaced a predetermined distance apart from the first side portion 140 in the second direction. The first side portion 140 and the second side portion 150 may be disposed parallel to each other. Areas of the first side portion 140 and the second side portion 150 may be equal to each other. The area of each of the first side portion 140 and the second side portion 150 may be smaller than the area of each of the front portion 120 and the rear portion 130.

The case 101 may further include an opening 160. The opening 160 according to the present embodiment may be a space surrounded by upper end portions of the front portion 120, the rear portion 130, the first side portion 140, and the second side portion 150. The opening 160 may connect an internal space and an external space of the case 101 to each other. Accordingly, the case 101 according to the present embodiment may have a rectangular parallelepiped shape with an open upper side.

The cap assembly 170 is coupled to the case 101. The cap assembly 170 includes a cap plate 171, terminals 310 and 320, and a cell vent 630.

The cap plate 171 closes the opening 160 and is coupled to the case 101. In the present embodiment, the cap plate 171 may be formed to have a flat plate shape. The cap plate 171 may be disposed to face the bottom portion 110 of the case 101 in the first direction. That is, the cap plate 171 may be disposed at a position spaced a predetermined distance apart from the bottom portion 110 in the first direction. The cap plate 171 and the bottom portion 110 may be disposed parallel to each other.

The cap plate 171 may be seated on an upper end portion of the case 101, more specifically, the upper end portions of the front portion 120, the rear portion 130, the first side portion 140, and the second side portion 150. The cap plate 171 may be coupled to the case 101 through various types of coupling methods including welding, bolting, fitting, and the like.

The cap plate 171 has a vent hole 182. In the present embodiment, the vent hole 182 may be formed to have a shape of a hole that vertically passes through the cap plate 171 in the first direction. The vent hole 182 provides a path through which flames, gases, smoke, or the like which is formed inside the case 101 when the secondary battery 2 undergoes thermal runaway due to an overcurrent or the like, are discharged to the outside of the case 101. In the present embodiment, a planar shape of the vent hole 182 may be an oval shape. However, the planar shape is not limited thereto and may be designed to be changed into any of various shapes such as a circular shape or a polygonal shape.

The cell vent 630 is coupled to the cap plate 171 to close the vent hole 182. The cell vent 630 includes a resin to be rupturable by a change in at least one of pressure and/or temperature.

For example, the cell vent 630 may be ruptured when the internal pressure of the case 101 is greater than or equal to reference pressure. For example, when the cell vent 630 is made of polyphenylene sulfide (PPS), the reference pressure at which the cell vent 630 is ruptured may be in a range of 8 kgf to 13.5 kgf.

Alternatively, the cell vent 630 may be ruptured or melt when an internal temperature of the case 101 is greater than or equal to a melting temperature of a resin that is a material of the cell vent 630. For example, when the cell vent 630 is made of PPS, the melting temperature of the cell vent 630 may be in a range of 229 °C to 286 °C.

During a normal operation of the secondary battery 2, the cell vent 630 may close the vent hole 182 to block an electrolyte or the like inside the case 101 from flowing out of the case 101 or block moisture, foreign materials, or the like from flowing into the case 101. Meanwhile, during thermal runaway of the secondary battery 2, the cell vent 630 may be ruptured to open the vent hole 182 so that flames, gases, smoke, or the like formed inside the case 101 may be discharged to the outside of the case 101.

In the present embodiment, an electrolyte injection port 180 which passes through the cap plate 171 and in which a sealing stopper may be installed may be formed in the cap plate 171. The electrolyte injection port 180 may be disposed to be spaced a predetermined distance apart from the vent hole 182.

The electrode assembly 200 may function as a unit structure that performs an operation of charging or discharging power in a secondary battery 2. The electrode assembly 200 may be accommodated inside the case 101.

Referring to FIGS. 2 to 4, the electrode assembly 200 according to the present embodiment may include a first electrode 210, a second electrode 220, and a separator 230 disposed between the first electrode 210 and the second electrode 220. A plurality of first electrodes 210, a plurality of separators 230, and a plurality of second electrodes 220 may be provided.

Hereinafter, an example in which the electrode assembly 200 has a stack form in which the plurality of first electrodes 210, the plurality of separators 230, and the plurality of second electrodes 220 are sequentially stacked in the third direction will be described. However, the electrode assembly 200 is not limited to such a form and may also be formed to have a different form, such as a form in which the first electrodes 210, the separators 230, and the second electrodes 220 are wound clockwise or counterclockwise around a winding axis in a state of being stacked.

The first electrode 210 may function as any one of a positive electrode and a negative electrode of the electrode assembly 200. Hereinafter, an example in which the first electrode 210 is the positive electrode of the electrode assembly 200 will be described. However, the first electrode 210 is not limited thereto and may also function as the negative electrode of the electrode assembly 200.

The first electrode 210 according to the present embodiment may be formed to have a form of foil including a metal material such as aluminum or an aluminum alloy. The type, size, and shape of the first electrode 210 are not particularly limited as long as the first electrode 210 does not cause chemical changes in a secondary battery and is conductive. A planar shape of the first electrode 210 may be designed to be changed into any of various shapes other than a rectangular shape shown in FIG. 4.

The plurality of first electrodes 210 may be provided. The plurality of first electrodes 210 may be arranged in the third direction between the front portion 120 and the rear portion 130 of the case 101. The number of first electrodes 210 may be designed to be changed according to the charge capacity or the like of the secondary battery 2.

A first active material layer 211 may be applied on at least a portion of the first electrode 210. The first active material layer 211 may be applied on both surfaces of the first electrode 210 or otherwise may be applied on only one surface of the first electrode 210.

Since the first electrode 210 functions as the positive electrode in the present embodiment, the first active material layer 211 may include a positive electrode active material.

The positive electrode active material may include a compound (lithiated intercalation compound) capable of reversibly intercalating and deintercalating lithium ions. More specifically, the positive electrode active material may include one or more types of composite oxides of lithium and a metal selected from cobalt, manganese, nickel, iron, or a combination thereof.

As an example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). Here, conditions of 0<x<1, 0<y<1, 0<z<1, and x+y+z=1 may be satisfied. The positive electrode active material may include only one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM), or may include two or all of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM).

The first active material layer 211 may further include a positive electrode conductive material.

The positive electrode conductive material is used to impart conductivity to the first active material layer 211, and any electrically conductive material that does not cause a chemical change in the battery may be used. Examples of the positive electrode conductive material may include a carbon-based material such as natural graphite, artificial graphite, carbon black, acetylene black, ketjen black, carbon fiber, carbon nanofiber, carbon nanotubes, and the like, a metal-based material in the form of a metal powder or metal fiber including copper, nickel, aluminum, silver, and the like, a conductive polymer such as a polyphenylene derivative, or a mixture thereof.

The first active material layer 211 may further include a positive electrode binder.

The positive electrode binder serves to adhere particles constituting the positive electrode active material to each other well, and to adhere the positive electrode active material to the first electrode 210 well.

Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, or a combination thereof.

When the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The first electrode 210 may include a first uncoated portion 212 which is not coated with the first active material layer 211. The first uncoated portion 212 according to the present embodiment may be disposed in an upper end area of the first electrode 210 which is disposed to face the opening 160 inside the case 101. However, the first uncoated portion 212 is not limited to such a form and in other embodiments, may be formed in an entire edge area of the first electrode 210.

The second electrode 220 may function as the remaining one of the positive electrode and the negative electrode of the electrode assembly 200. Hereinafter, an example in which the second electrode 220 is the negative electrode of the electrode assembly 200 will be described. However, the second electrode 220 is not limited thereto and may function as the positive electrode of the electrode assembly 200.

The plurality of second electrodes 220 may be provided. The plurality of second electrodes 220 may be arranged in the third direction between the front portion 120 and the rear portion 130 of the case 101. The first electrodes 210 and the second electrodes 220 may be alternately disposed in the third direction. The second electrode 220 may be spaced a predetermined distance apart from the first electrode 210 in the third direction.

The second electrode 220 according to the present embodiment may be formed to have a form of foil including a metal material such as copper, a copper alloy, nickel, or a nickel alloy. The type, size, and shape of the second electrode 220 are not particularly limited as long as the second electrode 220 does not cause chemical changes in a secondary battery and is conductive. A cross-sectional shape of the first electrode 210 may be designed to be changed into any of various shapes other than a rectangular shape shown in FIG. 4.

A second active material layer 221 may be applied on at least a portion of the second electrode 220. The second active material layer 221may be applied on both surfaces of the second electrode 220 or otherwise may be applied on only one surface of the second electrode 220.

Since the second electrode 220 functions as the negative electrode, the second active material layer 221 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite such as amorphous, plate-shaped, flaky, spherical, or fibrous natural graphite or artificial graphite. Examples of the amorphous carbon may include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x<2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to one embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The second active material layer 221 may further include a negative electrode conductive material and a negative electrode binder.

The negative electrode conductive material is used to impart conductivity to the second active material layer 221, and any electrically conductive material that does not cause a chemical change in the battery may be used. Examples of the negative electrode conductive material may include a carbon-based material such as natural graphite, artificial graphite, carbon black, acetylene black, Ketjen black, carbon fibers, carbon nanofibers, carbon nanotubes, and the like, a metal-based material in the form of a metal powder or metal fibers including copper, nickel, aluminum, silver, and the like, a conductive polymer such as a polyphenylene derivative, or a mixture thereof.

The negative electrode binder serves to adhere particles constituting the negative electrode active material to each other well, and to adhere the negative electrode active material to the second electrode 220 well.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, or a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode 220 may include a second uncoated portion 222 which is not coated with the second active material layer 221. The second uncoated portion 222 according to the present embodiment may be disposed in an upper end area of the second electrode 220 which is disposed to face the opening 160 inside the case 101. However, the second uncoated portion 222 is not limited to such a form and may be formed in an entire edge area of the second electrode 220.

The separator 230 may be disposed between the first electrode 210 and the second electrode 220. The separator 230 may perform a function of preventing a short circuit between the first electrode 210 and the second electrode 220 while allowing lithium ions to move between the first electrode 210 and the second electrode 220.

The separator 230 may be disposed to surround an entire surface area of the electrode assembly 200. Accordingly, the separator 230 may prevent the first electrode 210 and the second electrode 220 from being directly exposed to the outside of the electrode assembly 200.

The separator 230 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or both surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, Teflon, and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be present by being mixed in one coating layer or may be present in a form in which a coating layer including organic materials and a coating layer including inorganic materials are stacked.

The secondary battery 2 according to the embodiment of the present disclosure may further include an insulating plate 103 disposed between the cap plate 171 and the electrode assembly 200. The insulating plate 103 may insulate the cap plate 171 from the electrode assembly 200 by preventing the cap plate 171 from being in direct contact with the electrode assembly 200. The insulating plate 103 may fix a position of the electrode assembly 200 inside the case 101. The insulating plate 103 may prevent the electrode assembly 200 from being damaged when the cap plate 171 is deformed toward the inside of the case 101 due to an external impact or the like.

According to the present embodiment, the insulating plate 103 may be disposed to face the electrode assembly 200 in the first direction inside the case 101. That is, the electrode assembly 200, the insulating plate 103, and the cap plate 171 may be sequentially disposed in the first direction. The insulating plate 103 may be made of an insulating material such as polyethylene (PE), polypropylene (PP), or polyethylene terephthalate (PET) rubber.

In order to avoid confusion with tab members 240 and 250, connection members 400 and 500, gaskets 600 and 610, the cell vent 630, a bridge 620, or the like, the insulating plate 103 is intentionally omitted from FIG. 5.

Referring to FIGS. 2 to 5, the secondary battery 2 according to one embodiment of the present disclosure may further include a first tab member 240, a second tab member 250, a first connection member 400, and a second connection member 500.

The first tab member 240 may be connected to the first electrode 210 and may protrude outward from the electrode assembly 200. Since the first electrode 210 is exemplified as the positive electrode, the first tab member 240 may function as a positive electrode tab of the secondary battery 2. However, the first tab member 240 is not limited thereto, and when the first electrode 210 is the negative electrode, the first tab member 240 may function as a negative electrode tab of the secondary battery 2.

In the present embodiment, a distance from the first side portion 140 to the first tab member 240 may be smaller than a distance from the second side portion 150 to the first tab member 240. That is, the first tab member 240 may be disposed relatively closer to the first side portion 140 than the second side portion 150 inside the case 101.

The first tab member 240 according to the present embodiment may include a first inner tab member 241 and a first outer tab member 242.

The first inner tab member 241 and the first outer tab member 242 may extend from the first electrode 210 in the first direction. As an example, the first inner tab member 241 and the first outer tab member 242 may extend from the inside of the case 101 toward the cap plate 171.

The first inner tab member 241 and the first outer tab member 242 may be spaced apart from each other in the second direction. A distance from the first side portion 140 to the first outer tab member 242 may be smaller than a distance from the first side portion 140 to the first inner tab member 241.

In the present embodiment, the first inner tab member 241 may include a plurality of first inner tabs 241a. In the present embodiment, the first inner tab 241a may have a form of foil extending from the first uncoated portion 212 of the first electrode 210 in the first direction. The first inner tab 241a may have a substantially rectangular shape. However, the shape of the first inner tab 241a is not limited thereto and may be designed to be changed into any of various shapes.

The first inner tab 241a may be integrally formed with the first electrode 210. For example, the first inner tab 241a may be the remaining area of the first uncoated portion 212 that remains after a partial area of the first uncoated portion 212 is cut or removed through notch portioning processing or the like. Alternatively, the first inner tab 241a may be manufactured separately from the first electrode 210 and then connected to the first uncoated portion 212 through welding or the like. A material of the first inner tab 241a may be the same as a material of the first electrode 210.

The number of first inner tabs 241a may be the same as the number of first electrodes 210. The first inner tabs 241a may individually extend from the first uncoated portions 212 of different first electrodes 210. A plurality of first inner tabs 241a may be stacked in the third direction. The plurality of first inner tabs 241a may be disposed parallel to each other. Accordingly, the first inner tab member 241 according to the present embodiment may be an assembly of the plurality of first inner tabs 241a stacked in the third direction. The adjacent first inner tabs 241a may be in contact with each other and may be spaced apart from each other by a thickness of the separator 230.

In the present embodiment, the first outer tab member 242 may include a plurality of first outer tabs 242a. In the present embodiment, the first outer tab 242a may have a form of foil extending from the first uncoated portion 212 of the first electrode 210 in the first direction. The first outer tab 242a may have a substantially rectangular shape. However, the shape of the first outer tab 242a is not limited thereto and may be designed to be changed into any of various shapes. The shape and area of the first outer tab 242a may be the same as those of the first inner tab 241a or may be different from those of the first inner tab 241a.

The first outer tab 242a and the first inner tab 241a may be spaced apart from each other in the second direction. As an example, the first outer tab 242a and the first inner tab 241a may be sequentially disposed on the first uncoated portion 212 in the second direction.

The first outer tab 242a may be integrally formed with the first electrode 210. For example, the first outer tab 242a may be the remaining area of the first uncoated portion 212 that remains after a partial area of the first uncoated portion 212 is cut or removed through notch portioning processing or the like. Alternatively, the first outer tab 242a may be manufactured separately from the first electrode 210 and then connected to the first uncoated portion 212 through welding or the like. A material of the first outer tab 242a may be the same as the material of the first electrode 210.

The number of first outer tabs 242a may be the same as the number of first electrodes 210. The first outer tabs 242a may individually extend from the first uncoated portions 212 of different first electrodes 210. The plurality of first outer tabs 242a may be stacked in the third direction. The plurality of first outer tabs 242a may be disposed parallel to each other. Accordingly, the first outer tab member 242 according to the present embodiment may be an assembly of the plurality of first outer tabs 242a stacked in the third direction. The adjacent first outer tabs 242a may be in contact with each other or may be spaced apart from each other by the thickness of the separator 230.

The terminals 310 and 320 may include a first terminal 310 and a second terminal 320. The first terminal 310 may function as a component that provides an electrical connection between the busbar 3 or an external power apparatus and the first electrode 210 of the secondary battery 2. In the present embodiment, the first terminal 310 may be made of an electrically conductive material such as aluminum, nickel, or copper.

The first terminal 310 may overlap the cap plate 171 and may protrude outward from the cap plate 171. The first terminal 310 may be disposed on a first terminal mounting surface 174 formed in a stepped manner on an outer surface 172 of the cap plate 171 facing the external space of the case 101.

The first terminal 310 has a first welding groove 312 that is recessed in a -Z-axis direction. A first boss through-hole 176 that passes through the cap plate 171 may be formed in the first terminal mounting surface 174 to be aligned with the first welding groove 312 in the first direction.

The first terminal 310 may be electrically connected to the first electrode 210 through the first connection member 400. Accordingly, the first terminal 310 may function as a positive electrode terminal of the secondary battery 2.

The busbar 3 may be seated on an upper surface of the first terminal 310. The busbar 3 and the first terminal 310 may be integrally bonded through laser welding or the like.

The first connection member 400 provides an electrical connection between the first terminal 310 and the first tab member 240. The first connection member 400 may be made of an electrically conductive material such as copper, aluminum, or nickel.

In the present embodiment, the first connection member 400 may include a first current collector 410, a first inner plate 420, and a first outer plate 430.

The first current collector 410 may be disposed inside the case 101 and may be in contact with the first terminal 310. The first current collector 410 may be electrically connected to the first terminal 310.

The first current collector 410 according to the present embodiment may be disposed between the first terminal 310 and the electrode assembly 200. The first current collector 410 may have a flat plate shape perpendicular to the first direction. A lower surface of the first current collector 410 may be disposed to face a space formed between the first inner tab member 241 and the first outer tab member 242 spaced apart from each other in the second direction.

The first current collector 410 may include a first boss 411. The first boss 411 may have a shape of a pillar extending in the first direction from an upper surface of the first current collector 410 to a lower surface of the first terminal 310. The first boss 411 may pass through the first boss through-hole 176 of the cap plate 171 and may be in contact with the lower surface of the first terminal 310. The first boss 411 and the first terminal 310 may be bonded, for example, through a method including laser welding or the like.

The first inner plate 420 may be connected to the first current collector 410 and may be in contact with the first inner tab member 241. The first inner plate 420 according to the present embodiment may be connected in a stepped manner to one end portion of the first current collector 410 in the -Y-axis direction.

The first inner plate 420 and the first inner tab member 241 may be disposed to face each other in the first direction. One surface of the first inner plate 420 facing the first inner tab member 241 may be in contact with the first inner tab member 241. The first inner tab member 241 and the first inner plate 420 may be bonded, for example, through a method including laser welding or the like.

The first outer plate 430 may be connected to the first current collector 410 and may be in contact with the first outer tab member 242. The first outer plate 430 according to the present embodiment may be connected in a stepped manner to the other end portion of the first current collector 410 in a +Y-axis direction. In the present embodiment, the first inner plate 420 and the first outer plate 430 may extend from the first current collector 410 in opposite directions, respectively.

The first outer plate 430 and the first outer tab member 242 may be disposed to face each other in the first direction. One surface of the first outer plate 430 facing the first outer tab member 242 may be in contact with the first outer tab member 242. The first outer tab member 242 and the first outer plate 430 may be bonded, for example, through a method including laser welding or the like.

The second tab member 250 may be connected to the second electrode 220 and may protrude outward from the electrode assembly 200. Since the second electrode 220 is exemplified as the negative electrode, the second tab member 250 may function as a negative electrode tab of the secondary battery 2. However, the second tab member 250 is not limited thereto, and when the second electrode 220 is the positive electrode, the second tab member 250 may function as a positive electrode tab of the secondary battery 2.

In the present embodiment, a distance from the second side portion 150 to the second tab member 250 may be smaller than a distance from the first side portion 140 to the second tab member 250. That is, the second tab member 250 may be disposed relatively closer to the second side portion 150 than the first side portion 140 inside the case 101.

The second tab member 250 according to the present embodiment may include a second inner tab member 251 and a second outer tab member 252.

The second inner tab member 251 and the second outer tab member 252 may extend from the second electrode 220 in the first direction. As an example, the second inner tab member 251 and the second outer tab member 252 may extend from the inside of the case 101 to the cap plate 171.

The second inner tab member 251 and the second outer tab member 252 may be spaced apart from each other in the second direction. A distance from the second side portion 150 to the second outer tab member 252 may be smaller than a distance from the second side portion 150 to the second inner tab member 251.

In the present embodiment, the second inner tab member 251 may include a plurality of second inner tabs 251a. In the present embodiment, the second inner tab 251a may have a form of foil extending from the second uncoated portion 222 of the second electrode 220 in the first direction. The second inner tab 251a may have a substantially rectangular shape. However, the shape of the second inner tab 251a is not limited thereto and may be designed to be changed into any of various shapes.

The second inner tab 251a may be integrally formed with the second electrode 220. For example, the second inner tab 251a may be the remaining area of the second uncoated portion 222 that remains after a partial area of the second uncoated portion 222 is cut or removed through notch portioning processing or the like. Alternatively, the second inner tab 251a may be manufactured separately from the second electrode 220 and then connected to the second uncoated portion 222 through welding or the like. A material of the second inner tab 251a may be the same as a material of the second electrode 220.

The number of second inner tabs 251a may be the same as the number of second electrodes 220. The second inner tabs 251a may individually extend from the second uncoated portions 222 of different second electrodes 220. The plurality of second inner tabs 251a may be stacked in the third direction. The plurality of second inner tabs 251a may be disposed parallel to each other. Accordingly, the second inner tab member 251 according to the present embodiment may be an assembly of the plurality of second inner tabs 251a stacked in the third direction. The adjacent second inner tabs 251a may be in contact with each other or may be spaced apart from each other by the thickness of the separator 230.

In the present embodiment, the second outer tab member 252 may include a plurality of second outer tabs 252a. In the present embodiment, the second outer tab 252a may have a form of foil extending from the second uncoated portion 222 of the second electrode 220 in the first direction. The second outer tab 252a may have a substantially rectangular shape. However, the shape of the second outer tab 252a is not limited thereto and may be designed to be changed into any of various shapes. The shape and area of the second outer tab 252a may be the same as that of the second inner tab 251a or may be different from that of the second inner tab 251a.

The second outer tab 252a and the second inner tab 251a may be spaced apart from each other in the second direction. As an example, the second outer tab 252a and the second inner tab 251a may be sequentially disposed on the second uncoated portion 222 in the second direction.

The second outer tab 252a may be integrally formed with the second electrode 220. For example, the second outer tab 252a may be the remaining area of the second uncoated portion 222 that remains after a partial area of the second uncoated portion 222 is cut or removed through notch portioning processing or the like. Alternatively, the second outer tab 252a may be manufactured separately from the second electrode 220 and then connected to the second uncoated portion 222 through welding or the like. A material of the second outer tab 252a may be the same as the material of the second electrode 220.

The number of second outer tabs 252a may be the same as the number of second electrodes 220. The second outer tabs 252a may individually extend from the second uncoated portions 222 of different second electrodes 220. The plurality of second outer tabs 252a may be stacked in the third direction. The plurality of second outer tabs 252a may be disposed parallel to each other. Accordingly, the second outer tab member 252 according to the present embodiment may be an assembly of the plurality of second outer tabs 252a stacked in the third direction. The adjacent second outer tabs 252a may be in contact with each other and may also be spaced apart from each other by the thickness of the separator 230.

The second terminal 320 may function as a component that provides an electrical connection between the busbar 3 or an external power device and the second electrode 220 of the secondary battery 2. In the present embodiment, the second terminal 320 may be made of an electrically conductive material such as aluminum, nickel, or copper.

The second terminal 320 may overlap the cap plate 171 and may protrude outward from the cap plate 171. The second terminal 320 may be disposed on a second terminal mounting surface 177 formed in a stepped manner on the outer surface 172 of the cap plate 171 facing the external space of the case 101.

The second terminal 320 has a second welding groove 322 that is recessed in the -Z-axis direction. A second boss through-hole 179 that passes through the cap plate 171 may be formed in the second terminal mounting surface 177 to be aligned with the second welding groove 322 in the first direction.

The second terminal 320 may be electrically connected to the second electrode 220 through the second connection member 500. Accordingly, the second terminal 320 may function as a negative electrode terminal of the secondary battery 2.

The busbar 3 may be seated on an upper surface of the second terminal 320. The busbar 3 and the second terminal 320 may be integrally bonded through laser welding or the like.

The second connection member 500 provides an electrical connection between the second terminal 320 and the second tab member 250. The second connection member 500 may be made of an electrically conductive material such as copper, aluminum, or nickel.

In the present embodiment, the second connection member 500 may include a second current collector 510, a second inner plate 520, and a second outer plate 530.

The second current collector 510 may be disposed inside the case 101 and may be in contact with the second terminal 320. The second current collector 510 may be electrically connected to the second terminal 320.

The second current collector 510 according to the present embodiment may be disposed between the second terminal 320 and the electrode assembly 200. The second current collector 510 may have a flat plate shape perpendicular to the first direction. A lower surface of the second current collector 510 may be disposed to face a space formed between the second inner tab member 251 and the second outer tab member 252 spaced apart from each other in the second direction.

The second current collector 510 may include a second boss 511. The second boss 511 may have a shape of a pillar extending in the first direction from an upper surface of the second current collector 510 to a lower surface of the second terminal 320. The second boss 511 may pass through the second boss through-hole 179 of the cap plate 171 and may be in contact with the lower surface of the second terminal 320. The second boss 511 and the second terminal 320 may be bonded, for example, through a method including laser welding or the like.

The second inner plate 520 may be connected to the second current collector 510 and may be in contact with the second inner tab member 251. The second inner plate 520 according to the present embodiment may be connected in a stepped manner to one end portion of the second current collector 510 in the +Y-axis direction.

The second inner plate 520 and the second inner tab member 251 may be disposed to face each other in the first direction. One surface of the second inner plate 520 facing the second inner tab member 251 may be in contact with the second inner tab member 251. The second inner tab member 251 and the second inner plate 520 may be bonded, for example, through a method including laser welding or the like.

The second outer plate 530 may be connected to the second current collector 510 and may be in contact with the second outer tab member 252. The second outer plate 530 according to the present embodiment may be connected to the other end portion of the second current collector 510 in the -Y-axis direction. In the present embodiment, the second inner plate 520 and the second outer plate 530 may extend from the second current collector 510 in opposite directions, respectively.

The second outer plate 530 and the second outer tab member 252 may be disposed to face each other in the first direction. One surface of the second outer plate 530 facing the second outer tab member 252 may be in contact with the second outer tab member 252. The second outer tab member 252 and the second outer plate 530 may be bonded, for example, through a method including laser welding or the like.

Referring to FIGS. 2 to 13, the cap assembly 170 according to the first embodiment of the present disclosure may further include the gaskets 600 and 610 and the bridge 620. The gaskets 600 and 610 may include a first gasket 600 and a second gasket 610.

The first gasket 600 is coupled to the first terminal 310 and the cap plate 171 such that a space between the first terminal 310 and the cap plate 171 is sealed. The first gasket 600 electrically insulates the cap plate 171 and the first terminal 310 from each other.

The first gasket 600 may have a first gasket hollow portion 602 through which the first boss 411 passes such that the first boss 411 passes through the first boss through-hole 176 to be bonded to the first terminal 310. The first gasket hollow portion 602, the first boss through-hole 176, and the first welding groove 312 are arranged in a line in the first direction.

The second gasket 610 is coupled to the second terminal 320 and the cap plate 171 such that a space between the second terminal 320 and the cap plate 171 is sealed. The second gasket 610 electrically insulates the cap plate 171 and the second terminal 320 from each other.

The second gasket 610 may have a second gasket hollow portion 612 through which the second boss 511 passes such that the second boss 511 passes through the second boss through-hole 179 to be bonded to the second terminal 320. The second gasket hollow portion 612, the second boss through-hole 179, and the second welding groove 322 are arranged in a line in the first direction.

The gaskets 600 and 610 include a resin. For example, the first gasket 600 and the second gasket 610 may be made of a resin material. The resin of the first gasket 600 and the second gasket 610 may be, for example, PPS, PE, PP, or PET.

The cell vent 630 includes a resin. For example, the cell vent 630 may be made of a resin material. As a resin of the cell vent 630, a resin capable of withstanding an electrolyte accommodated inside the case 101 may be used. The resin of the cell vent 630 may be, for example, PPS, PP, a liquid crystal polymer (LCP), PE, or PET. The resin of the cell vent 630 may be the same as the resin of the gaskets 600 and 610.

The cell vent 630 may include a central plate portion 631, a notch portion 640, and a rim portion 650.

The rim portion 650 may be bonded to an inner circumferential surface 184 of the vent hole of the cap plate 171 that defines the vent hole 182. The central plate portion 631 may close the vent hole 182 and may be connected to the rim portion 650. For example, a thickness of the central plate portion 631 in the first direction may be in a range of 0.4 mm to 1.2 mm.

The rim portion 650 may cover a portion of a circumference of the inner circumferential surface 184 of the vent hole that belongs to the outer surface 172 of the cap plate 171, and a portion of the circumference of the inner circumferential surface 184 of the vent hole that belongs to an inner surface 173 of the cap plate 171. Therefore, the thickness of the rim portion 650 in the first direction may be greater than a thickness of the central plate portion 631.

The cap plate 171 may include a vent step portion 186 formed in a stepped manner on the inner circumferential surface 184 of the vent hole to increase a contact area with the rim portion 650 of the cell vent 630. Accordingly, the rim portion 650 may be bonded to the circumference of the inner circumferential surface 184 of the vent hole with strong bonding strength.

In the case of the cell vent 630 according to the first embodiment of the present disclosure, a height difference DL1 between the central plate portion 631 and the outer surface 172 of the cap plate 171 in the first direction may be greater than a height difference DL2 between the central plate portion 631 and the inner surface 173 of the cap plate 171 in the first direction. Here, a height CPL of the central plate portion 631 may be a height at a midpoint between an outer surface and an inner surface of the central plate portion 631.

The notch portion 640 may be formed in the central plate portion 631. When the internal pressure of the case 101 is greater than or equal to a reference pressure, the notch portion 640 may be ruptured. During thermal runaway of the secondary battery 2, the notch portion 640 may be ruptured to open the vent hole 182. Accordingly, flames, gases, smoke, or the like formed inside the case 101 may be discharged to the outside of the case 101.

The notch portion 640 may include a closed-curve groove 643 having a closed-curve planar shape, and a linear groove 645 extending from the closed-curve groove 643 to an outer circumference of the central plate portion 631 along a first linear path.

The planar shape of the closed-curve groove 643 may be, for example, a rectangular shape. A plurality of linear grooves 645 may be provided, and each linear groove 645 may extend obliquely from a corner of the rectangular shape.

The outer surface of the central plate portion 631 may be an upper surface that is a surface opposite to the inner surface of the central plate portion 631 facing the electrode assembly 200. The inner surface of the central plate portion 631 may be flat without any step. In other words, a stepped groove or protrusion may not be formed on the inner surface of the central plate portion 631.

A cross-sectional shape of the notch portion 640 shown in FIG. 9, that is, a cross-sectional shape of the closed-curve groove 643 and the linear groove 645, may be a quadrangular shape. However, as shown in FIGS. 10 to 12, a cell vent according to another embodiment of the present disclosure may include a notch portion 640A, 640B, or 640C which has a cross-sectional shape that is not a quadrangular shape (e.g., semicircular, parabolic, and/or a wedge shape).

For example, FIG. 10 illustrates the notch portion 640A having a semicircular cross-sectional shape, FIG. 11 illustrates the notch portion 640B having a parabolic cross-sectional shape, and FIG. 12 illustrates the notch portion 640C having a wedge-shaped cross-sectional shape.

Meanwhile, the notch portions 640, 640A, and 640B shown in FIGS. 9 to 11 may be formed to be concavely recessed from the outer surface of the central plate portion 631 or otherwise may be formed to be concavely recessed from the inner surface of the central plate portion 631. Similarly, the notch portion 640C shown in FIG. 12 may be formed to be concavely recessed from the inner surface of the central plate portion 631 or may be formed to be concavely recessed from the outer surface of the central plate portion 631.

A textured portion 1701 or 6301 may be formed on at least one of a cell vent contact surface portion of a surface of the cap plate 171 in contact with the cell vent 630, and/or a cap plate contact surface portion of a surface of the cell vent 630 in contact with the cap plate 171.

For example, the textured portion 1701 including a plurality of protrusions 1702 and grooves 1704 may be formed on the cell vent contact surface portion, and the textured portion 6301 including a plurality of protrusions 6302 and grooves 6304 may additionally or alternatively be formed on the cap plate contact surface portion. The protrusions 1702 and 6302 and the grooves 1704 and 6304 may each have a size of, for example, several tens of nanometers to several hundreds of micrometers.

The protrusion 1702 included in the textured portion 1701 on the cell vent contact surface portion may be fitted into the groove 6304 included in the textured portion 6301 on the cap plate contact surface portion. The protrusion 6302 included in the textured portion 6301 on the cap plate contact surface portion may be fitted into the groove 1704 included in the textured portion 1701 on the cell vent contact surface portion.

At portions at which the cap plate 171 and the cell vent 630 are bonded, the plurality of protrusions 1702 and the plurality of grooves 1704 of the cap plate 171 may be engaged and in close contact with the plurality of grooves 6304 and the plurality of protrusions 6302 and the cell vent 630. Accordingly, bonding strength between the cap plate 171 and the cell vent 630 made of different materials can be improved, and sealing performance can also be improved.

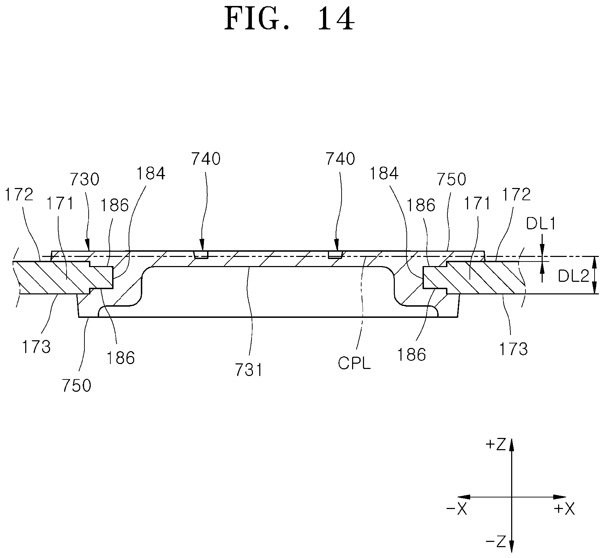

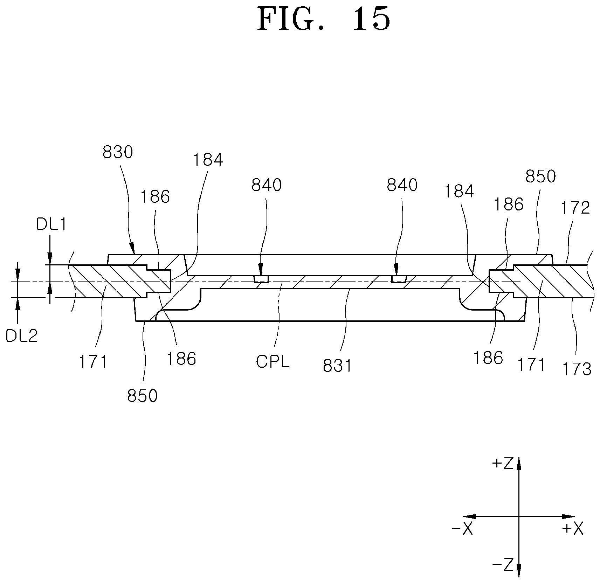

FIG. 14 is a cross-sectional view of a cap assembly according to a second embodiment of the present disclosure and an enlarged view of a cell vent and surroundings thereof. FIG. 15 is a cross-sectional view of a cap assembly according to a third embodiment of the present disclosure and an enlarged view of a cell vent and surroundings thereof.

Referring to FIGS. 2, 3, 9, and 14, instead of the cell vent 630 according to the first embodiment of the present disclosure, a cell vent 730 according to the second embodiment of the present disclosure shown in FIG. 14 may be coupled to a cap plate 171.

Like the cell vent 630 according to the first embodiment of the present disclosure, the cell vent 730 according to the second embodiment of the present disclosure may be made of the same resin material as a resin material of gaskets 600 and 610 and may include a central plate portion 731, a notch portion 740, and a rim portion 750.

The rim portion 750 may be bonded to an inner circumferential surface 184 of a vent hole of the cap plate 171 that defines a vent hole 182. The central plate portion 731 may close the vent hole 182 and may be connected to the rim portion 750.

The rim portion 750 may cover a portion of a circumference of the inner circumferential surface 184 of the vent hole that belongs to an outer surface 172 of the cap plate 171, and a portion of the circumference of the inner circumferential surface 184 of the vent hole that belongs to an inner surface 173 of the cap plate 171.

The notch portion 740 may be formed in the central plate portion 731. When the internal pressure of a case 101 is greater than or equal to the reference pressure, the notch portion 740 may be ruptured.

In the case of the cell vent 730 according to the second embodiment of the present disclosure, a height difference DL2 between the central plate portion 731 and the inner surface 173 of the cap plate 171 in the third direction may be greater than a height difference DL1 between the central plate portion 731 and the outer surface 172 of the cap plate 171 in the third direction. Here, a height CPL of the central plate portion 731 may be a height at a midpoint between an outer surface and an inner surface of the central plate portion 731.

Referring to FIGS. 2, 3, 9, and 15, instead of the cell vent 630 according to the first embodiment of the present disclosure, a cell vent 830 according to the third embodiment of the present disclosure as shown in FIG. 15 may be coupled to a cap plate 171.

Like the cell vent 630 according to the first embodiment of the present disclosure, the cell vent 830 according to the third embodiment of the present disclosure may be made of the same resin material as a resin material of gaskets 600 and 610 and may include a central plate portion 831, a notch portion 840, and a rim portion 850.

The rim portion 850 may be bonded to an inner circumferential surface 184 of a vent hole of the cap plate 171 that defines a vent hole 182. The central plate portion 831 may close the vent hole 182 and may be connected to the rim portion 850.

The rim portion 850 may cover a portion of a circumference of the inner circumferential surface 184 of the vent hole that belongs to an outer surface 172 of the cap plate 171, and a portion of the circumference of the inner circumferential surface 184 of the vent hole that belongs to an inner surface 173 of the cap plate 171.

The notch portion 840 may be formed in the central plate portion 831. When the internal pressure of a case 101 is greater than or equal to reference pressure, the notch portion 840 may be ruptured.

In the case of the cell vent 830 according to the third embodiment of the present disclosure, a height difference DL2 between the central plate portion 831 and the inner surface 173 of the cap plate 171 in the third direction may be equal to a height difference DL1 between the central plate portion 831 and the outer surface 172 of the cap plate 171 in the third direction. Here, a height CPL of the central plate portion 831 may be a height at a midpoint between an outer surface and an inner surface of the central plate portion 831.

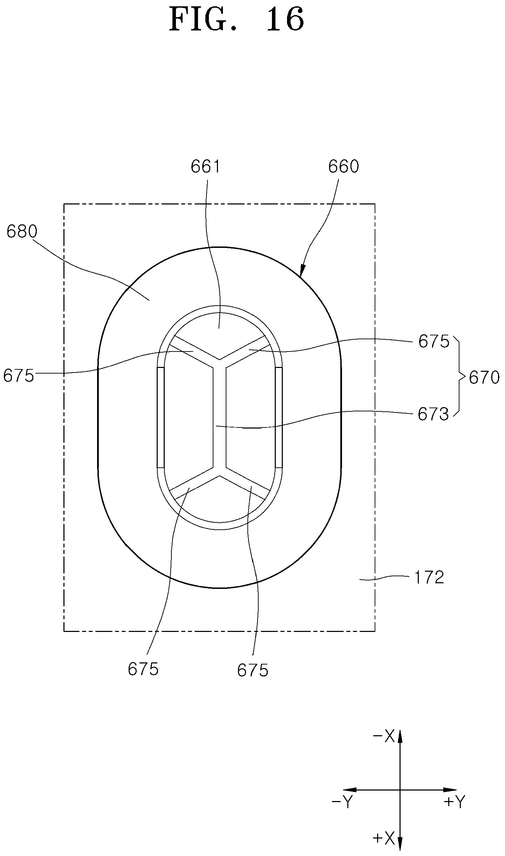

FIG. 16 is an enlarged plan view of a cell vent included in a cap assembly according to a fourth embodiment of the present disclosure.

Referring to FIG. 16, like the cap assembly 170 according to the first embodiment, the cap assembly according to the fourth embodiment of the present disclosure may include a cap plate 171 and a cell vent 660. The cell vent 660 may include a rim portion 680 that is bonded to an inner circumferential surface of a vent hole of the cap plate 171, a central plate portion 661 that closes the vent hole and is connected to the rim portion 680, and a notch portion 670 that is formed in the central plate portion 661 and is ruptured when the internal pressure of a case 101 is greater than or equal to reference pressure.

The notch portion 670 may include a first linear groove 673 extending along a first linear path without contact with an outer circumference of the central plate portion 661, and a second linear groove 675 extending from an end of the first linear groove 673 along a second linear path intersecting the first linear groove 673.

The first linear groove 673 may extend in a longitudinal direction of the central plate portion 661. A plurality of second linear grooves 675 may be provided. The plurality of second linear grooves 675 may extend obliquely from both ends of the first linear groove 673 in a longitudinal direction.

Referring again to FIGS. 3, 5, and 9, the bridge 620 connects the gasket 600 to the cell vent 630. The bridge 620 may connect the cell vent 630 to the first gasket 600 among the first gasket 600 and the second gasket 610.

The first gasket 600 and the cell vent 630 may be integrally connected by the bridge 620. However, the bridge 620 is an exemplary component for connecting the first gasket 600 to the cell vent 630, and in the case of a cap assembly according to another embodiment of the present disclosure, a first gasket and a cell vent may be connected by a connection portion other than the bridge 620. Alternatively, the first gasket and the cell vent may be integrally connected directly without a connection portion.

The bridge 620 may include a resin. For example, the bridge 620 may be made of a resin material. The resin of the bridge 620 may be, for example, PPS, PE, PP, or PET. The resin of the bridge 620 may be the same as the resin of the cell vent 630 and the resin of the gaskets 600 and 610.

The bridge 620 may be bonded to the inner surface 173 of the cap plate 171 facing the electrode assembly 200. The cap plate 171 may include a bridge groove 190 recessed in a stepped manner in the inner surface 173 such that the bridge 620 is seated therein. The bridge 620 may be more firmly bonded to the cap plate 171 due to the bridge groove 190.

The bridge 620 may extend in the second direction. The bridge 620 may include a bridge body 621 and a bridge rib 623. The bridge body 621 may be seated in the bridge groove 190 and may be bonded to the inner surface 173 of the cap plate 171 so as not to extend beyond a boundary of the bridge groove 190.

The bridge rib 623 may protrude from the bridge body 621 in the -Z-axis direction and may extend in an extending direction of the bridge 620. Rigidity of the bridge 620 can be further enhanced by the bridge rib 623.

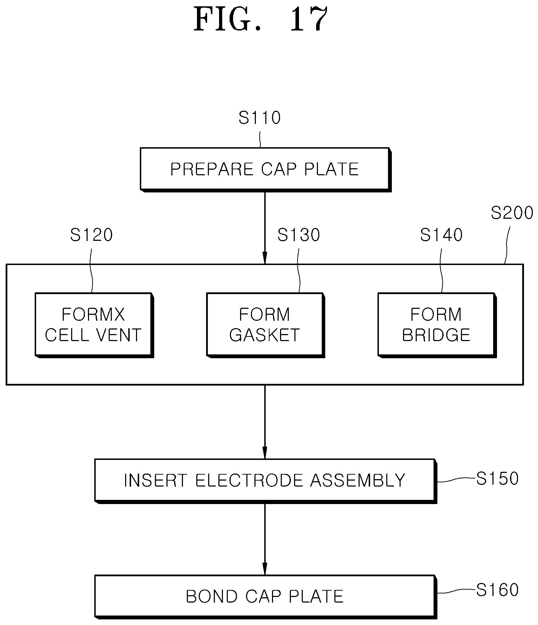

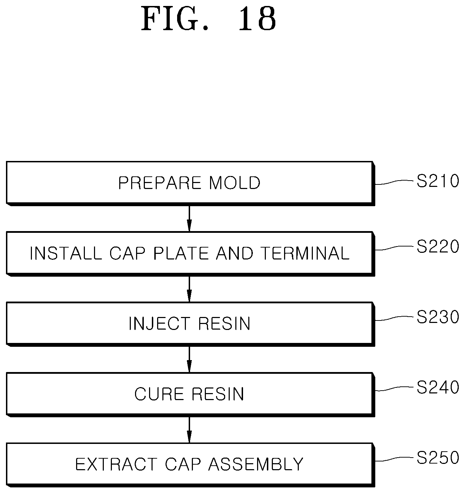

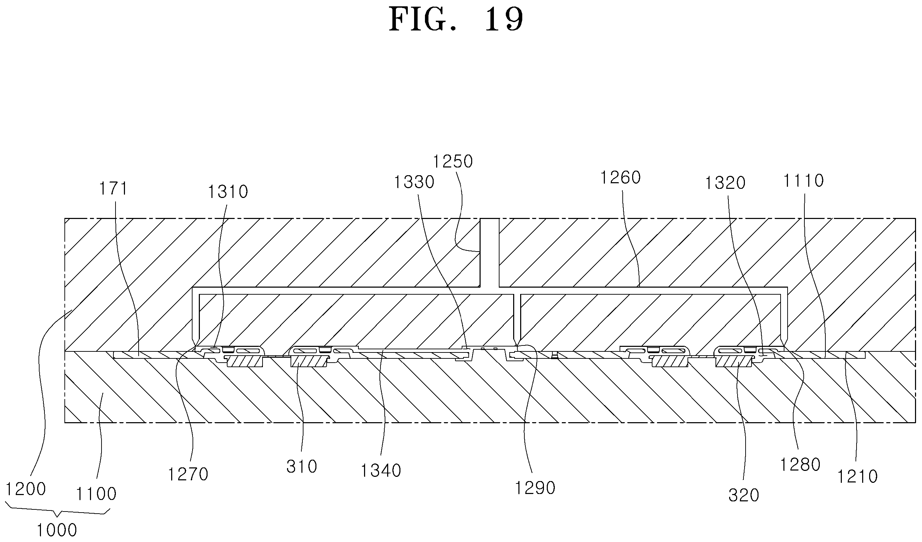

FIG. 17 is a block diagram showing a method of manufacturing a secondary battery according to one embodiment of the present disclosure. FIG. 18 is a schematic block diagram illustrating a cell vent formation operation, a gasket formation operation, and a bridge formation operation of FIG. 17. FIG. 19 exemplarily illustrates a cap plate and terminal installation operation of FIG. 18 and is a cross-sectional view illustrating a state in which a cap plate and a terminal are installed inside an injection mold.

Referring to FIGS. 3, 5 to 8, and 17 to 19, the method of manufacturing a secondary battery according to one embodiment of the present disclosure includes a cap plate preparation operation S110, a cell vent formation operation S120, an electrode assembly insertion operation S150, and a cap plate bonding operation S160.

The method of manufacturing a secondary battery according to one embodiment of the present disclosure may be a method of manufacturing the secondary battery 2 according to one embodiment of the present disclosure described with reference to FIGS. 2 to 8.

The cap plate preparation operation S110 is an operation of preparing a cap plate 171 including a vent hole 182. The cap plate preparation operation S110 may include, for example, press-processing a metal plate to form the cap plate 171. Since the cap plate 171 has been described herein in the description of the secondary battery 2 according to one embodiment of the present disclosure, a redundant description thereof will be omitted.

The cell vent formation operation S120 is an operation of molding a resin to form a cell vent 630 that closes the vent hole 182 and is coupled to the cap plate 171. Since the cell vent 630 has been described herein in the description of the secondary battery 2 according to one embodiment of the present disclosure, a redundant description thereof will be omitted.

The electrode assembly insertion operation S150 is an operation of inserting an electrode assembly 200 into a case 101 through an opening 160 of the case 101. Since the case 101 and the electrode assembly 200 have been described herein in the description of the secondary battery 2 according to one embodiment of the present disclosure, redundant descriptions thereof will be omitted.

The cap plate bonding operation S160 is an operation of bonding the cap plate 171, to which the cell vent 630 is bonded, to the case 101 such that the opening 160 is closed.

The method of manufacturing a secondary battery according to one embodiment of the present disclosure may further include a gasket formation operation S130 and a bridge formation operation S140.

The gasket formation operation S130 is an operation of molding a resin to form gaskets 600 and 610 bonded to terminals 310 and 320 and the cap plate 171 such that spaces between the terminals 310 and 320 and the cap plate 171 are sealed, wherein the terminals 310 and 320 overlap the cap plate 171 and protrude outward from the cap plate 171.

For example, in the gasket formation operation S130, a first gasket 600 that seals a space between a first terminal 310 and the cap plate 171 and a second gasket 610 that seals a space between a second terminal 320 and the cap plate 171 may be formed. Since the first terminal 310, the second terminal 320, the first gasket 600, and the second gasket 610 have been described herein in the description of the secondary battery 2 according to one embodiment of the present disclosure, redundant descriptions thereof will be omitted.

The bridge formation operation S140 is an operation of molding a resin to form a bridge 620 connecting the gasket 600 to the cell vent 630. The bridge 620 may connect one of a first gasket 600 and a second gasket 610, for example, the first gasket 600, to the cell vent 630, and may not connect the second gasket 610 to the cell vent 630.

In order for the bridge 620 to be firmly bonded to an inner surface 173 of the cap plate 171, the cap plate preparation operation S110 may include forming a bridge groove 190 recessed in a stepped manner in the inner surface 173 of the cap plate 171 such that the bridge 620 is seated therein.

At least one operation of the cell vent formation operation S120, the gasket formation operation S130, and the bridge formation operation S140 may include an insert injection operation of inserting the cap plate 171 into an injection mold and injecting a resin into the injection mold.

However, in another embodiment of the present disclosure, at least one of the cell vent 630, the gaskets 600 and 610, and the bridge 620 may be formed through a method such as a double injection, blow molding, or vacuum molding method other than an insert injection method.

The cell vent 630, a pair of gaskets 600 and 610, and the bridge 620 may, in some embodiments, be made of one type of resin, that is, the same type of resin.

The cell vent formation operation S120, the gasket formation operation S130, and the bridge formation operation S140 may be performed together through an insert molding operation S200 using one injection mold 1000.

The cell vent formation operation S120, the gasket formation operation S130, and the bridge formation operation S140 may include a mold preparation operation S210, a cap plate and terminal installation operation S220, a resin injection operation S230, a resin curing operation S240, and a cap assembly extraction operation S250.

The mold preparation operation S210 is an operation of preparing the injection mold 1000 including a first mold 1100 and a second mold 1200 that are spaced apart from each other to be in close contact with each other. For example, the first mold 1100 may move in a direction toward the second mold 1200 so that the first mold 1100 and the second mold 1200 may come into close contact with each other as shown in FIG. 19.

The cap plate and terminal installation operation S220 is an operation of interposing the cap plate 171, the first terminal 310, and the second terminal 320 between the first mold 1100 and the second mold 1200, bringing the first mold 1100 and the second mold 1200 into close contact with each other to fix the cap plate 171, the first terminal 310, and the second terminal 320 between the first mold 1100 and the second mold 1200, and forming a cell vent space 1330 corresponding to a shape of the cell vent 630, a first gasket space 1310 corresponding to a shape of the first gasket 600, a second gasket space 1320 corresponding to a shape of the second gasket 610, and a bridge space 1340 corresponding to a shape of the bridge 620.

When the cap plate 171, the first terminal 310, and the second terminal 320 are interposed between a first core surface 1110 of the first mold 1100 and a second core surface 1210 of the second mold 1200 facing each other in a state in which the first mold 1100 and the second mold 1200 are spaced apart from each other, and the first mold 1100 and the second mold 1200 are brought into close contact with each other, the cap plate 171, the first terminal 310, and the second terminal 320 may be fixed without moving in a state of being inserted into the injection mold 1000. In addition, the cell vent space 1330, the first gasket space 1310, the second gasket space 1320, and the bridge space 1340 may be formed between the first core surface 1110 and the second core surface 1210.

The resin injection operation S230 is an operation of injecting a molten resin into the injection mold 1000 in which the first mold 1100 and the second mold 1200 are in close contact with each other, and filling the cell vent space 1330, the first gasket space 1310, the second gasket space 1320, and the bridge space 1340 with the molten resin.

The resin curing operation S240 is an operation of curing the resin filling the cell vent space 1330, the first gasket space 1310, the second gasket space 1320, and the bridge space 1340. When the molten resin is cured, a cap assembly 170 is formed inside the injection mold 1000.

The cap assembly 170 may include the cap plate 171, the first terminal 310, the second terminal 320, the first gasket 600, the second gasket 610, the cell vent 630, and the bridge 620 that are integrally coupled.

The cap assembly extraction operation S250 is an operation of separating the first mold 1100 and the second mold 1200 from each other and extracting the cap assembly 170 from the injection mold 1000.

In the resin injection operation S230 according to one embodiment of the present disclosure, the cell vent space 1330 and the first gasket space 1310 may be filled with the molten resin before the bridge space 1340.

The second mold 1200 may include a sprue bush (not shown), a sprue 1250, a runner 1260, a first gate 1270, a second gate 1280, and a third gate 1290.

A resin injection device that injects a molten resin into the injection mold 1000 is connected to the sprue bush. The sprue 1250 may extend from the sprue bush into the interior of the second mold 1200. The runners 1260 may branch off of the sprue 1250 and extend to the first gate 1270, the second gate 1280, and the third gate 1290.

When a molten resin is injected from the resin injection device in a state in which the first mold 1100 and the second mold 1200 are in close contact with each other, the molten resin sequentially passes through the sprue bush, the sprue 1250, and the runner 1260. The molten resin may pass through the first gate 1270 to fill the first gasket space 1310, pass through the second gate 1280 to fill the second gasket space 1320, and pass through the third gate 1290 to fill the cell vent space 1330.

After the molten resin fills the first gasket space 1310 and the cell vent space 1330, the molten resin may flow into the bridge space 1340 to fill the bridge space 1340. Therefore, the cell vent space 1330 and the first gasket space 1310 may be filled with the molten resin before the bridge space 1340.

Meanwhile, a speed at which the molten resin fills the second gasket space 1320 may be the same as a speed at which the molten resin fills the first gasket space 1310. Therefore, the second gasket space 1320 may also be filled with the molten resin before the bridge space 1340.

In the resin injection operation S230 according to another embodiment of the present disclosure, among the cell vent space 1330 and the first gasket space 1310, the first gasket space 1310 is first filled with the molten resin. The bridge space 1340 may be filled with the molten resin before the cell vent space 1330 is filled with molten resin after the first gasket space 1310 is filled with the molten resin.

In this case, the second mold 1200 includes the sprue bush (not shown), the sprue 1250, the runner 1260, the first gate 1270, and the second gate 1280, but does not include the third gate 1290.

A resin injection device that injects a molten resin into the injection mold 1000 is connected to the sprue bush. The sprue 1250 may extend from the sprue bush into the interior of the second mold 1200. The runners 1260 may branch off of the sprue 1250 and extend to the first gate 1270 and the second gate 1280.

When a molten resin is injected from a resin injection device in a state in which the first mold 1100 and the second mold 1200 are in close contact with each other, the molten resin sequentially passes through the sprue bush, sprue 1250, and runner 1260. The molten resin may pass through the first gate 1270 to fill the first gasket space 1310 and pass through the second gate 1280 to fill the second gasket space 1320.

After the molten resin fills the first gasket space 1310, the molten resin may flow into the bridge space 1340 to fill the bridge space 1340, and then may flow into the cell vent space 1330 to fill the cell vent space 1330. Accordingly, the molten resin may sequentially fill the first gasket space 1310, the bridge space 1340, and the cell vent space 1330.

Meanwhile, a speed at which the molten resin fills the second gasket space 1320 may be the same as a speed at which the molten resin fills the first gasket space 1310. Accordingly, the second gasket space 1320 may also be filled with the molten resin before the bridge space 1340 and the cell vent space 1330.

In the resin injection operation S230 according to still another embodiment of the present disclosure, among the cell vent space 1330 and the first gasket space 1310, the cell vent space 1330 is first filled with the molten resin. The bridge space 1340 may be filled with the molten resin before the first gasket space 1310 is filled with the molten resin after the cell vent space 1330 is filled with the molten resin.

In this case, the second mold 1200 includes a sprue bush (not shown), a sprue 1250, a runner 1260, a second gate 1280, and a third gate 1290, but does not include a first gate 1270.

A resin injection device that injects a molten resin into the injection mold 1000 is connected to the sprue bush. The sprue 1250 may extend from the sprue bush into the interior of the second mold 1200. The runners 1260 may branch off of the sprue 1250 and extend to the second gate 1280 and the third gate 1290.

When a molten resin is injected from the resin injection device in a state in which the first mold 1100 and the second mold 1200 are in close contact with each other, the molten resin sequentially passes through the sprue bush, the sprue 1250, and the runner 1260. The molten resin may pass through the second gate 1280 to fill the second gasket space 1320 and pass through the third gate 1290 to fill the cell vent space 1330.

After the molten resin fills the cell vent space 1330, the molten resin may flow into the bridge space 1340 to fill the bridge space 1340, and then may flow into the first gasket space 1310 to fill the first gasket space 1310. Accordingly, the molten resin may sequentially fill the cell vent space 1330, the bridge space 1340, and the first gasket space 1310.

Meanwhile, a speed at which the molten resin fills the second gasket space 1320 may be the same as a speed at which the molten resin fills the cell vent space 1330. Accordingly, the second gasket space 1320 may also be filled with the molten resin before the bridge space 1340 and the first gasket space 1310.

According to the present disclosure, since a cell vent is made of a resin material, when a gasket made of a resin material is formed, the cell vent can be formed together with the gasket through injection molding. Therefore, a process of welding a metal cell vent to a cap plate can be omitted during a manufacturing process of the secondary battery. Accordingly, costs of secondary batteries can be reduced, and productivity can be improved.

According to the present disclosure, not only can a cell vent rupture to open a vent hole when a pressure condition inside a case is satisfied, but the cell vent can also rupture or melt to open the vent hole when a temperature condition inside the case is satisfied. Therefore, when an abnormality occurs inside a secondary battery, a cell vent reacts more sensitively so that a vent hole opens quickly, thereby preventing the abnormality from escalating into a large fire or a major explosion.

When a case and a cap plate of a secondary battery according to the present disclosure are made of a stainless steel material having stronger rigidity than an aluminum alloy, a joint between the case and the cap plate does not rupture before a cell vent ruptures. Therefore, it may be prevented from escalating into a large fire or a major explosion.

However, aspects and features of the present disclosure are not limited to those described herein and other aspects and features not mentioned will be clearly understood by those skilled in the art from the detailed description given herein.

Although the present disclosure has been described with reference to some embodiments and drawings illustrating aspects thereof, the present disclosure is not limited thereto. Various modifications and variations can be made by a person skilled in the art to which the present disclosure belongs within the scope of the technical spirit of the disclosure and the claims and equivalents thereto.

## Claims

1. A cap assembly (170) comprising:
a cap plate (171) having a vent hole (182);
a terminal (310, 320) configured to protrude outward from the cap plate (171); and
a cell vent (630, 660, 730, 830) coupled to the cap plate (171) to close the vent hole (182) and including a resin rupturable by a change in at least one of pressure and/or temperature.

2. The cap assembly (170) as claimed in claim 1, further comprising a gasket (600, 610) including a second resin and coupled to the terminal (310, 320) and the cap plate (171) such that a space between the terminal (310, 320) and the cap plate (171) is sealed.

3. The cap assembly (170) as claimed in claim 2, wherein the gasket (600, 610) and the cell vent (630, 660, 730, 830) are integrally connected.

4. The cap assembly (170) as claimed in claim 3, further comprising a bridge (620) including a third resin and configured to connect the gasket (600, 610) to the cell vent (630, 660, 730, 830).

5. The cap assembly (170) as claimed in claim 4, wherein the bridge (620) is bonded to an inner surface (173) of the cap plate (171).

6. The cap assembly (170) as claimed in claim 1, wherein the cell vent (630, 660, 730, 830) includes:
a rim portion (650, 680, 750, 850) bonded to an inner circumferential surface (184) of the vent hole (182) of the cap plate (171) which defines the vent hole (182);
a central plate portion (631, 661, 731, 831) configured to close the vent hole (182) and connected to the rim portion (650, 680, 750, 850); and
a notch portion (640, 640A, 640B, 640C, 670, 740, 840) formed in the central plate portion (631, 661, 731, 831) and ruptured when internal pressure of a case (101) coupled to the cap plate (171) is greater than or equal to a reference pressure.

7. The cap assembly (170) as claimed in claim 6, wherein a height difference between the central plate portion (631, 661, 731, 831) and an outer surface (172) of the cap plate (171) is greater than a height difference between the central plate portion (631, 661, 731, 831) and an inner surface (173) of the cap plate (171).

8. The cap assembly (170) as claimed in claim 6, wherein a height difference between the central plate portion (631, 661, 731, 831) and an inner surface (173) of the cap plate (171) is greater than a height difference between the central plate portion (631, 661, 731, 831) and an outer surface (172) of the cap plate (171).

9. The cap assembly (170) as claimed in claim 6, wherein a height difference between the central plate portion (631, 661, 731, 831) and an inner surface (173) of the cap plate (171) is equal to a height difference between the central plate portion (631, 661, 731, 831) and an outer surface (172) of the cap plate (171).

10. The cap assembly (170) as claimed in claim 6, wherein the notch portion (640, 640A, 640B, 640C, 670, 740, 840) includes:
a closed-curve groove (643) having a closed-curve planar shape; and
a linear groove (645) configured to extend from the closed-curve groove (643) to an outer circumference of the central plate portion (631, 661, 731, 831) along a linear path.

11. The cap assembly (170) as claimed in claim 6, wherein the notch portion (640, 640A, 640B, 640C, 670, 740, 840) includes:
a first linear groove (673) configured to extend along a first linear path without contact with an outer circumference of the central plate portion (631, 661, 731, 831); and
a second linear groove (675) configured to extend from an end of the first linear groove (673) along a second linear path intersecting the first linear groove (673).

12. The cap assembly (170) as claimed in any one of claims 1 to 11, wherein a textured portion (1701, 6301) is formed on at least one of a cell vent contact surface portion of a surface of the cap plate (171) in contact with the cell vent (630, 660, 730, 830), and/or a cap plate (171) contact surface portion of a surface of the cell vent (630, 660, 730, 830) in contact with the cap plate (171).

13. A secondary battery (2) comprising:
an electrode assembly (200);
a case (101) configured to accommodate the electrode assembly (200) and including an opening (160) in one side thereof; and
a cap assembly (170) coupled to the case (101), wherein the cap assembly (170) includes:
a cap plate (171) having a vent hole (182);
a terminal (310, 320) configured to protrude outward from the cap plate (171); and
a cell vent (630, 660, 730, 830) coupled to the cap plate (171) to close the vent hole (182) and including a resin rupturable by a change in at least one of pressure and/or temperature.

14. A method of manufacturing a secondary battery (2), the method comprising:
a cap plate (171) preparation operation of preparing a cap plate (171) having a vent hole (182);
a cell vent (630, 660, 730, 830) formation operation of molding a resin to form a cell vent (630, 660, 730, 830) configured to close the vent hole (182) and coupled to the cap plate (171);
an electrode assembly (200) insertion operation of inserting an electrode assembly (200) into a case (101) through an opening (160) of the case (101); and
a cap plate (171) bonding operation of bonding the cap plate (171), to which the cell vent (630, 660, 730, 830) is bonded, to the case (101) such that the opening (160) is closed.

15. The method as claimed in claim 14, wherein the cell vent (630, 660, 730, 830) formation operation includes an insert injection operation of inserting the cap plate (171) into an injection mold (1000) and injecting the resin into the injection mold (1000).
